# EUROPEAN PATENT SPECIFICATION

(11) **EP 1 589 439 B1**
(45) Date of publication and mention of the grant of the patent: **21.12.2011**
(21) Application number: 05007897.1
(22) Date of filing: 11.04.2005
(51) Int. Cl.: G06F 17/00, G09F 27/00

(54) **Data notification method and system**
Informationsmitteilungsverfahren und System
Procédé et système de notification d'informations

(30) Priority: 13.04.2004 JP 2004117799
(43) Date of publication of application: 26.10.2005
(73) Proprietor: Hitachi Ltd., Tokyo 100-8280 (JP)
(72) Inventor: Kawamichi, Hiroaki, Chiyoda-ku Tokyo 100-8220 (JP); Kato, Hiromitsu, Chiyoda-ku Tokyo 100-8220 (JP); Nakata, Junji, Chiyoda-ku Tokyo 100-8220 (JP); Kawano, Katsumi, Chiyoda-ku Tokyo 100-8220 (JP); Hirasawa, Shigeki, Chiyoda-ku Tokyo 100-8220 (JP); Sameshima, Shigetoshi, Chiyoda-ku Tokyo 100-8220 (JP)
(74) Representative: Strehl Schübel-Hopf & Partner

(56) References cited:
- EP-A- 0 991 006
- EP-A- 1 158 821
- WO-A-01/18697
- WO-A-01/93230
- WO-A-02/25624
- US-A1- 2001 038 034

## Description

### CLAIMS OF PRIORITY

The present application claims prority from Japanese application serial no. JP2004-117799, filed on April 13, 2004.

### BACKGROUND OF THE INVENTION

The present invention relates to a data notification method and a data notification system, and more specifically to a data notification method and a data notification system that are suitable for use when entities to which advertising or data is provided form a group.

As loudspeakers and display units are becoming generic, systems that provide data to those persons located in the vicinity of such device through commercial use of advertising, etc. are offered for practical use. Since provision of data is conducted in a stereotyped manner with those systems, there is a problem in that intended persons who are supposed to receive the data may pass through the device without stopping, and effect of data provision to the intended persons who are supposed to receive the data is not always expected to be high.

The "image display method" described in Japanese Patent Laid-open No. 2002-73321 stated below is one of the measures for improving this problem. The method offers an image display method which can enhance effects of advertising, or effects and values of the displayed image for persons or customers by automatically switching indoor or outdoor advertising displays or image displays according to characteristics of persons, or more specifically to their characteristics as customers.

The above-described prior art is designed to enhance advertising effects by recognizing characteristics of persons who appear in an image taken.

However, the method is designed to display an image by assuming the status of individual person. For a case where the image is utilized by a plurality of users at the same time, therefore, it is difficult to provide data in an adequate method when providing the group of those persons with data.

The present invention has been made to solve the problem of the above-described prior art, and it is an object of the invention to provide data notification method which enables an effective data notification with an adequate method for a case where a plurality of intended persons are supposed to receive data such as advertising at the same time and further such intended persons form a group.

EP-A-1125881 discloses a display system with the features of the preamble of present claim 8. Other known systems are described in WO 01/93230 A and WO 01/18697A.

### SUMMARY OF THE INVENTION

In the present invention, as defined in the independent claims, data notification devices such as a display unit, a radio station and a data acquisition device such as a camera are installed in a public space of a station, a shopping street, an exhibition hall, etc. Thereafter, profile data of a mobile device owned by an intended person to whom data is notified (hereinafter referred to as the "intended person for data notification") is acquired via a radio, or positional data is acquired by imaging the intended person for data notification.

Then, based on the data thus acquired on the intended person for data notification, a judgment is made as to whether a plurality of intended persons for data notification form a group or not, and the intended person for data notification who has the highest importance among persons in the group is be determined, by giving the highest importance to the intended person for data notification among all the persons in the group who has the highest authority over the persons in the group.

Then, a judgment is made, based on the positional relationship of the data notification device or the data acquisition device, as to whether or not the intended person for data notification who is determined to have the highest importance in the group is in a staying status at a certain location in the public space. If it is judged that the intended person stays at the location, an action to change the display on the display unit, etc. is taken to enhance the effects of advertising, etc.

With the data notification system, by directing an attention to the intended person for data notification having high importance in the group, changing advertising displays, and giving better viewing of advertisement to the intended person for data notification having high importance, it is possible to make the intended person for data notification having high importance to make a halt and eventually to make the group itself to be in a staying status, thus enabling to enhance notification effects of data on advertising, etc.

As described above, according to the present invention, it is possible to provide a data notification system which enables effective notification of data for a case where a plurality of intended persons receive a notification such as advertising at the same time and such intended persons form a group.

### BRIEF DESCRIPTION OF DRAWINGS

Fig. 1 is a configuration diagram of a data notification system according to a first preferred embodiment of the present invention;
Fig. 2 is a software configuration diagram of the data notification system according to the first embodiment of the present invention;
Fig. 3 is a diagram showing an example of a profile data table to be stored in a profiles DB 8;
Fig. 4 is a diagram showing an example of an image data table to be stored in an images DB 9;
Fig. 5 is a flow chart illustrating processes of the data notification system according to the first embodiment of the present invention (Part 1);
Fig. 6 is a flow chart illustrating processes of the data notification system according to the first embodiment of the present invention (Part 2);
Fig. 7 is a diagram showing an example of a display unit of the data notification system according to the first embodiment of the present invention;
Fig. 8 is a configuration diagram of a data notification system according to a second preferred embodiment of the present invention;
Fig. 9 is a software configuration diagram of the data notification system according to the second embodiment of the present invention; and
Fig. 10 is a flow chart illustrating processes of the data notification system according to the second embodiment of the present invention.

### DESCRIPTION OF THE PREFERRED EMBODIMENT

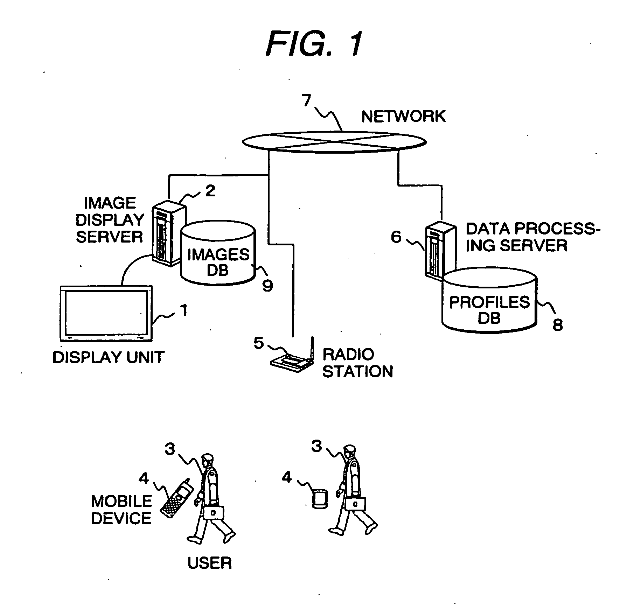

Hereinafter, preferred embodiments according to the present invention will be described with reference to Figs. 1 to 10.

### [First Embodiment]

Hereinafter, a first embodiment according to the present invention will be described with reference to Figs. 1 to 7.

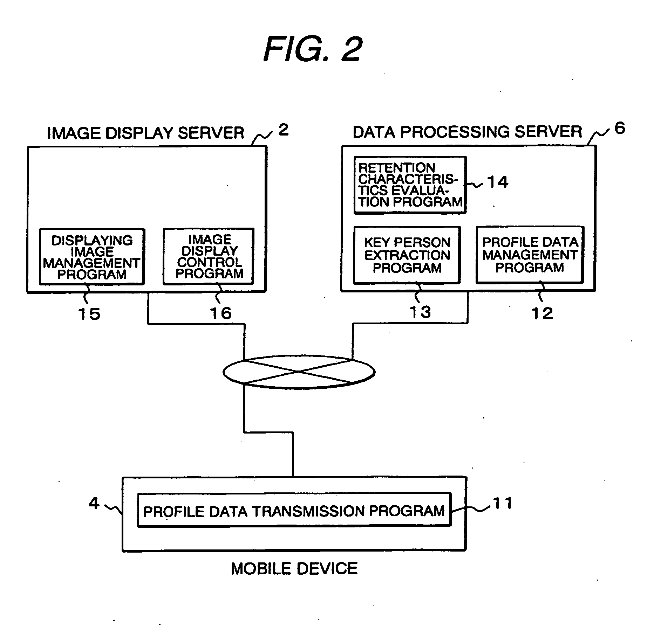

First, configuration of the data notification system according to the first embodiment of the present invention will be described with reference to Figs. 1 and 2.

Fig. 1 is a configuration diagram of the data notification system according to the first embodiment of the present invention.

Fig. 2 is a software configuration diagram of the data notification system according to the first embodiment of the present invention.

The embodiment refers to a system which, using a display unit installed in a public space to which many users visit, provides and notifies data in a method that is appropriate for the status of a user located in the vicinity of the display unit. Examples of the public space include a station, an exhibition hall and a multi-tenant building.

In the system, a display unit 1 is connected to an image display server 2. Here, data may be provided to visitors by using voices through equipment such as a speaker instead of using the display unit 1. The display unit 1 displays images stored in an images database (DB) 9 in responding to a request from the image display server 2. Then, the data displayed on the display unit 1 is provided to a plurality of users 3 who visit the public space where the display unit 1 is installed.

Here, the data to be displayed on the display unit 1 includes guidance data of the peripheral area and advertising data. One user 3 carries a mobile device 4 which incorporates a computing device and/or a storage device. The mobile device 4 is connected to a data processing server 6 via the radio station 5. The mobile device 4 can be a cell phone, a personal digital assistant (PDA), a radio frequency identification (RF-ID) tag, an integrated circuit (IC) card, etc.

The data processing server 6 acquires data such as age, gender and family structure of the user 3, who carries a mobile device 4, from the mobile device 4 and stores the data in a profiles DB 8. To acquire the data, the user 3 may enter the data, or the profile data of the user 3 who carries the mobile device may be acquired automatically from the mobile device registered in advance.

Data on relationship between users who are presently located in the vicinity of the display unit 1 is acquired, and a judgment is made as to whether the user 3 forms a group or not.

Two methods are available for judging whether the users 3 form a group or not: one method is to judge whether the users 3 belong to one group based on the profile data acquired; and another method is to measure the grouping status based on positional data transmitted from the mobile device 4. With these methods, an assumption that the users 3 form a group can be made when the following conditions are satisfied: A group of the users 3 remains in a certain area for a specific period of time, in a certain area in a specific time zone, or in specific number of areas.

Then, within the group, a user 3 who is determined to have an influential power on actions over persons in the group will be assumed to be a user 3 having high importance. Specific examples of the group, and those of the user 3 having high importance will be described later.

Alternatively, as a means for acquiring data on the users 3, formation of a group by the users 3 may be judged by preparing a camera instead of the radio station 5 and using the image data taken by the camera. In this case, formation of the group will be judged by recognizing the image taken by the camera.

Next, a user having high importance is determined in the group, the formation of which is judged as stated above. The user having high importance in the group should mean the user within the group who has the strongest influential power over the group members. Such user may sometimes be the person who assumes the position as a leader of the group, or otherwise, if family members form a group, a child may sometimes be the user having high importance.

To determine the user having high importance, two methods are available: one method is to refer to profile data; and another method is to use a vital sign that is captured through a camera. With the latter method, for example, it is judged that which user is attracting attentions of other users based on action data such as directions to which users are facing and data on visual lines of users. In addition, the user who is attracting attentions of other users most is assumed to be the user having an influential power on actions, or the user having high importance. Alternatively, a user who has determined, based on data on moving and acting directions of users, to takes the leading position of the group for the longest period of time is assumed to be the user having high importance.

It should be noted that examples of the groups and users having high importance will be described later.

The data processing server 6 is connected to the image display server 2 via a network 7. With the system, to allow the user having high importance in the group to halt, it is designed to enhance notification effect of data in a manner to change data to be displayed, or to change the display methods according to timing before and after the user having high importance in the group makes a halt.

If the user having high importance can be successfully induced to make a halt, other group members will also make a halt. Therefore, it is expected that notification effects of data will be enhanced.

It should be noted that, hereinafter, the status that a user remains in a certain area for a specific period of time shall be referred to as a "staying status. " More specifically, it is intended that, by directing an attention to the status where the user having high importance stays in a certain area when viewed from the data display device 1, displays or methods of notifying data will be changed according to timing before and after the user is in a staying status.

Fig. 2 shows an example of the software configuration of the data notification system.

The mobile device 4 includes a profile data transmission program 11 which keeps data on the users 3 who carry the mobile device 4 and transmits the data to be stored in the profiles DB 9.

The data processing server 6 includes a profile data management program 12, a key person extraction program 13 and a staying characteristics evaluation program 14, as software to be executed thereon.

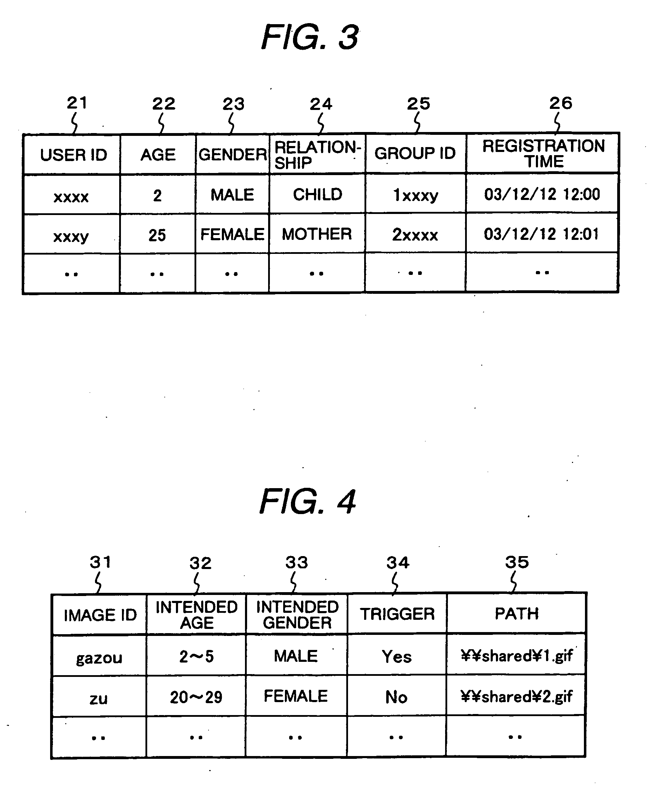

The profile data transmission program 11 transmits profile data (which will be described hereunder with reference to Fig. 3) of the mobile device 4.

The profile data management program 12 registers the profile data to be transmitted thereto with the profiles DB 8, and updates or deletes the profile data registered therein.

The key person extraction program 13 acquires profile data, or data on the users 3 which is acquired from a mobile device or from other data acquisition devices such as a camera, analyzes the data, evaluates relationship between users, and determines a user having high importance.

The staying characteristics evaluation program 14 makes a judgment as to whether users stay or not, by judging that users stay in a certain area for a specified period of time when viewed from a display unit or other data acquisition devices.

It should be noted that the profile data management program 12 may be arranged to manage data on the users 3, the acquisition of which has been unsuccessful from the profile data transmission program 11 for a certain period of time, in the profiles DB 8 as history data.

The image display server 2 includes a displaying image management program 15 and an image display control program 16 as programs to be executed thereon.

The displaying image management program 15 accumulates images to be displayed on the display unit 1 in the images DB 9 and updates or deletes the images accumulated in the images DB 9. The image display control program 16 controls actual display of images on the display unit 1.

It should be noted that the key person extraction program 13 and the staying characteristics evaluation program 14 may be installed in the image display server 2.

Next, a data structure to be used for the data notification system of the present invention will be described with reference to Figs. 3 and 4

Fig. 3 is a diagram showing an example of a profile data table to be stored in a profiles DB 8.

Fig. 4 is a diagram showing an example of an image data table to be stored in an images DB 8.

The fields of the profile data table comprise: as shown in Fig. 3, a user ID 21 which is an identifier of the users 3; age 22 and gender 23 which are attribute data of the users; and registration time 26 which shows the registration time of the image data in the profiles DB 8. Here, the attribute data of a user may include user data on tastes and interests.

The fields of the profile data table further comprise relationship 24 which shows relationship with other users 3 and a group ID 25 which shows identifiers of groups to which the users 3 belong. The users having the same group ID 25 shall belong to the same group. By managing groups in the manner described above, it is possible to manage the users 3 when they belong to a plurality of groups.

It should be noted that, the relationship 24 in Fig. 3 shows relationship that is uniquely determined within a family. The relationship shows an example of what is called a nuclear family in which the relationship between the mother and a child is defined uniquely.

The fields of the image data table comprise: an image ID 31 which is an identifier of an image; intended age 32 which covers the range of ages of intended users for which the image is displayed; intended gender 33 which shows sexuality of intended users for which the image is displayed; a trigger 34 which shows whether the image to be displayed is an image to be displayed for the users 3 having high importance; and a path 35 which shows storage destination of the image. For a child of a lower intended age, for example, it is possible to display an image of a popular cartoon character, thus attracting attention of the child.

In addition, although not shown in the figure, it is possible, by adding a field intended for a specific group, to display advertising images of games or of household appliances when the group to be indicated by the field is intended for families; to display advertising images related to business types when the group to be indicated by the field is intended for companies; or to display advertising of painting tools when it is intended for painting clubs.

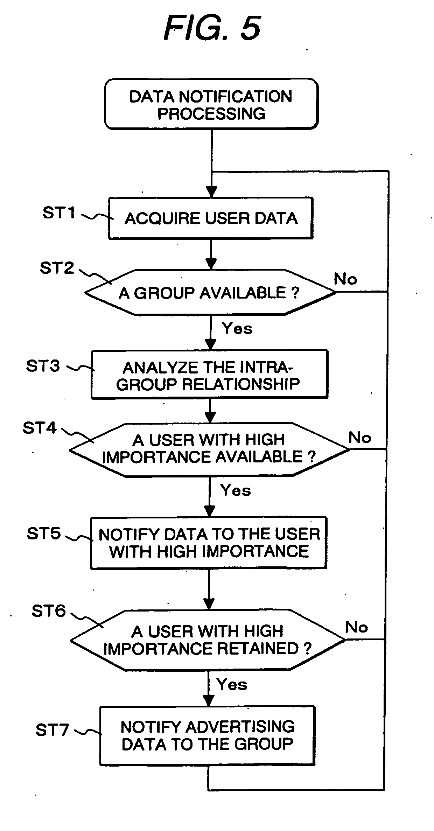

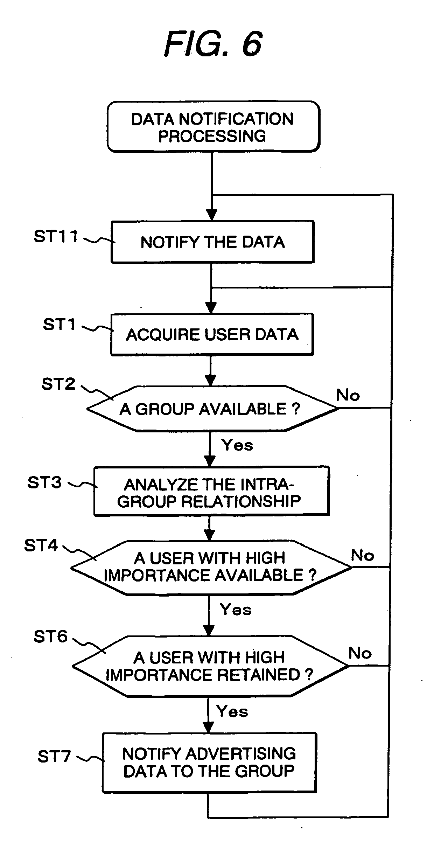

Next, processes of a data notification system according to the first embodiment of the present invention will be described with reference to Figs. 5 and 6.

Figs. 5 and 6 are flow charts showing processes of the data notification system according to the first embodiment of the present invention.

First, processes of a data processing system according to the embodiment will be described, while referring to the flow chart shown in Fig. 5 step by step.

First, profile data of users are acquired from the mobile device 4 carried by the users via the radio station 5 (ST1). Alternatively, user data may be acquired from a camera or a sensor.

The data thus acquired is processed by the profile data management program 12 of the data processing server 6.

Next, the data processing server 6 makes a judgment as to whether the users form a group or not (ST2).

In the judgment to determine whether the users form a group or not, users who are judged to belong to the same group are the users 3 with whom the same group ID 25 is registered with the profile data shown in Fig. 3. Alternatively, the users who are judged to belong to the same group may be users 3 who are registered in the profiles DB 8 in the same timing. Here, the judgment of the same timing to register users shall be defined, for example, to be five seconds before and after another registration. Here, when a plurality of data processing servers 6 are available, the judgment may be made by inquiring other data processing servers 6 to define only a group of users 3, who are judged by the specified number or more of the data processing server 6 to be in a same group, as the group.

In addition, through measurement based on positional relationship of the radio station 5, devices such as a sensor and a camera acquiring data, and a display unit, it can be defined that the users form a group when: users stay in a same area for a specified period of time; or users are authorized to stay in a same area in a same time zone. Further, when it is arranged to capture movements of users in a plurality of areas, it may be defined that users who are together in the specific number of areas form a group.

When it is judged there is no group in step ST2, then the step goes to step ST1. If it is judged there is a group in step ST2, then the step goes to step ST3.

When it is judged there is a group, relationships among all users belonging to the group are analyzed by the key person extraction program 13 (ST3). When the presence of a group is judged based on profiles data, values of the relationship 24 and the group ID 25 are acquired from the profiles DB 8 as intra-group relationship data and the data is analyzed. In addition, when user data is acquired from a camera, etc., relationship among users within the group is analyzed based on the image acquired.

Next, a user having high importance is identified based on the analysis made in ST3 (ST4). For example, the user 3 whose age is lowest in the group, or the user 3 who is found to be in the highest order from the relationship data in the group is judged to have high importance.

More specifically, in the former case, for example, a "family" is assumed as a group, and among users who are stated "child" in the relationship 24 of the profile data, the user 3 having the lowest age 22 is judged to be a user having high importance. In this case, the user whose height is lowest among users in the group may be determined to be the user having high importance. The height may be detected with human body detection sensors located at different levels or detected through image processing, or otherwise, may be detected from an item "height" in the profiles DB 8 by newly adding the item.

In the latter case, for example, an organization such as a company is assumed as a group, and the user 3 whose relationship is identified to be senior by other users 3 is judged to be the user having high importance.

Further, another method for determining a user having high importance is to assume relationship through image recognition for a user whose data on the relationship 24 and the same group ID 25 are not registered, or for a user whose profile data cannot be acquired. For example, a user who is found, through tracking of visual lines of the user 3, to have the longest cumulative time during which the user is looked on by the user 3 other than himself or herself. Alternatively, a user who keeps the leading position for a long time is assumed based on data on moving directions and actions of users, and the user is determined to be the user having high importance. Here, when there are a plurality of groups, a user having high importance is chosen from a group having the largest number of users. Alternatively, a user having high importance may be chosen from a group having a longer period of staying time. It should be noted that a plurality of users having high importance may be chosen.

Further, for a case of an exhibition, etc., a user belonging to the most popular category, as determined based on data on visits of users, may be determined to be the user having high importance. For example, when many customers are in their 10s of age, users who appear in the field of age 22 from 10 to 19 may be determined to be the user having high importance. In addition, the users 3 may set the person having high importance via the mobile device 4.

When no user having high importance is judged to be available in step ST4, the step returns to step ST1. If it is judged in step ST4 that a user having high importance is available, image data is acquired from the image data table by the image display control program 16 of the image display server 2. Then, an image intended for the users 3 who is judged to be the user having high importance is displayed on the display unit 1 (ST5).

Next, for a case where a certain period of time has elapsed since the user having high importance was registered, the staying characteristics evaluation program 14 judges whether the users 3 belonging to the group stays or not (ST6).

Judgment of staying can be carried out in the manner that the user having high importance stays for a certain period of time in a same area when viewed from data-acquisition devices such as a display unit or a radio station, by utilizing a position recognition technology by using image processing, or a technology offering more precise position recognition such as an RFID.

In addition, staying may be determined by a condition that the user having high importance has come close to a data-acquisition device such as a display unit or a radio station for a certain period of time or over.

Alternatively, staying may be determined in the manner to make a judgment based on a condition that a user having high importance has come close, within a certain distance, to a data-acquisition device such as a display unit or a radio station. Here, the term "for a certain period of time" may be defined to be a period of time equivalent to a time period during which an image is displayed in step ST5, or alternatively, the period may be defined to be 30 seconds, for example, without being bound by the above-described method.

Further, staying may be determined by a condition that the user having high importance has performed any input operations on a display unit or a terminal unit.

Here, the user to be judged whether he or she stays or not may be a certain number or more of users in a group or may be all users in the group.

If it is not judged that the user having high importance is present, the process returns to step ST1.

If it is judged that the user having high importance is present in step ST6, common advertising data is provided to the group by the display image control program 16 via the display unit 1 (ST7). Alternatively, the common data is displayed to users in the group except the user having high importance.

For example, when family members form a group and the user having high importance is a child in the family, images such as cartoons which attract interests of the child will be displayed to the child who is the user having high importance, and advertising of toy shops or children' s cloths are displayed to other family members or the parents.

The data to be displayed here includes advertising data, guidance data, etc. Regarding the mode of notifying data, image data may be displayed on the display unit 1 shown in Fig. 1, or data may be notified via voices through devices such as a speaker.

Further, the data to be notified may be associated with each other at time points before and after the user determined to have high importance or all users in the group come to be in a staying status. As for the example described above, a case where advertising will be displayed to the parents when the child is interested in a cartoon and makes a halt falls under this case.

In addition, the mode of display at time points before and after the user determined to have high importance or all users in the group come to be in a staying status may be modified in various ways.

For example, it is also possible to display data that is required to be highlighted in a noticeable way, by modifying the notification position, size and amount of data according to display data at time points before and after the staying. Further, the data to be displayed after the staying may be displayed either at the upper part, the lower part, the right side or the left side of the data to be displayed before the staying.

Furthermore, it may be arranged in the manner that, considering the positional relationship between the user having high importance and other users in the group, the data to be displayed after the staying of the user determined to have high importance may be displayed either on the front/back or the right/left side of the user having high importance, or otherwise, either at the forward or the backward position in a moving direction of the user having high importance. The reason for the arrangement is that, since the user having high importance attracts the attention of other users, displaying of data at a position closer to the user having high importance would facilitate the data to be captured by the user having high importance.

In addition, for the similar reason, after the user having high importance has stayed, data may be displayed on a display unit that is installed in the vicinity of a location on an extended line of a line connecting other users in the group and the user determined to have high importance.

For example, with the example shown above, when the user having high importance is a child, the parents should usually direct their eyes on their child when the child made a halt. This is the reason why data to be notified to the child will be displayed on the extended line of their visual lines.

Further alternatively, if display is made on a display unit or a terminal unit in a regular state, when the user having high importance performs an input operation on the display unit or the terminal unit, it may be judged as a staying status for notification of display-only data in a one-way manner.

Next, a variation of the data notification system according to the embodiment will be described with reference to Fig. 6.

The example shown in Fig. 6 exemplifies a case where data is steadily provided and advertising data to a group is provided when a user having high importance is in a staying status.

With the example, an image is chosen from images stored in the images DB 9 and display of the image is steadily performed on the display unit 1 by the image display control program 16 (ST11). Upon completion of display of the image, the process goes to step ST1, wherein processing is executed in a similar way to the flow shown in Fig. 5. With the display example, a mode in which data like a neon sign on the street is continuously displayed is assumed.

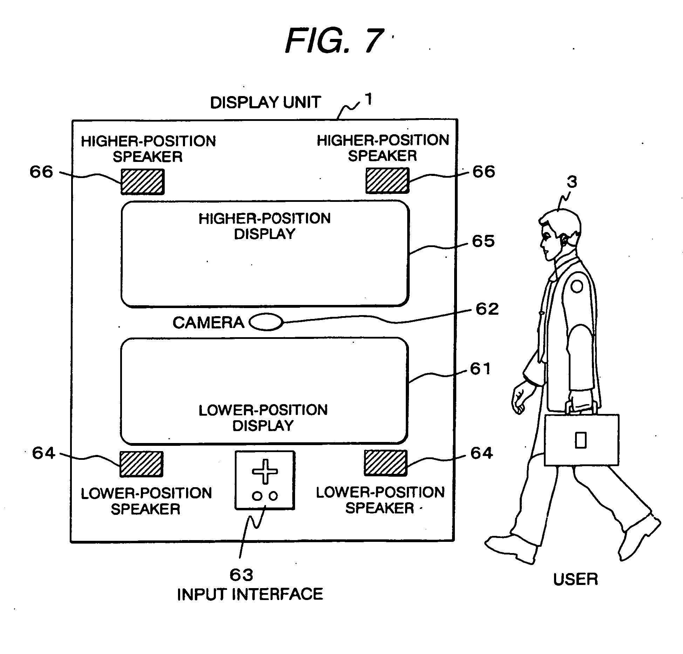

Next, an example of the display unit of the data notification system according to the embodiment of the present invention will be described with reference to Fig. 7.

Fig. 7 is a diagram showing an example of the display unit of the data notification system according to the embodiment of the present invention.

The display unit 1 is characterized that it includes a plurality of displays, thus allowing for two types of displaying method.

The display unit 1 includes an input interface 63, a camera 62, a lower-position speaker 64, and a lower-position display 61, which are installed at lower positions, and a higher-position speaker 66, and a higher-position display 65, which are installed at higher positions.

The devices installed at lower-positions are installed at levels that enable a child to view the devices, and the devices installed at higher-positions are installed at positions higher than the child's height. The input interface 63 is an input device such as a joystick.

The lower-position speaker 64 and the higher-position speaker 66 are devices to output voices and they are connected to the lower-position display 61 and the higher-position display 65, respectively.

For a case where the display unit 1 is applied to the data notification system of the embodiment, the above-described group should be a family. In this case, the display unit can be used effectively in such ways: displaying content such as a cartoon for children on the lower-position display 61 when the user having high importance is a child; and, displaying advertising of shops such as a toy shop or a video shop related to cartoons to be viewed by the adult users 3, when the child is in a staying status and starts using the input interface 63 of the lower-position display 61 on the higher-position display 65.

### [Second Embodiment]

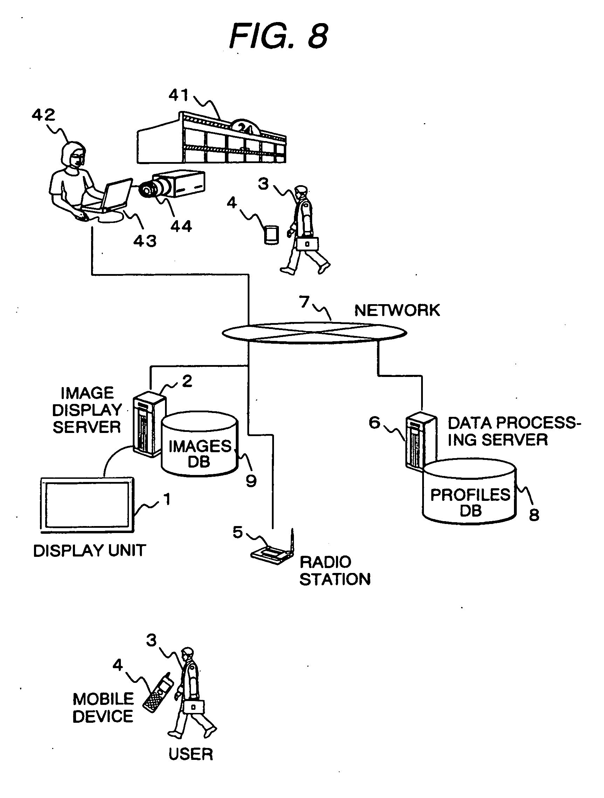

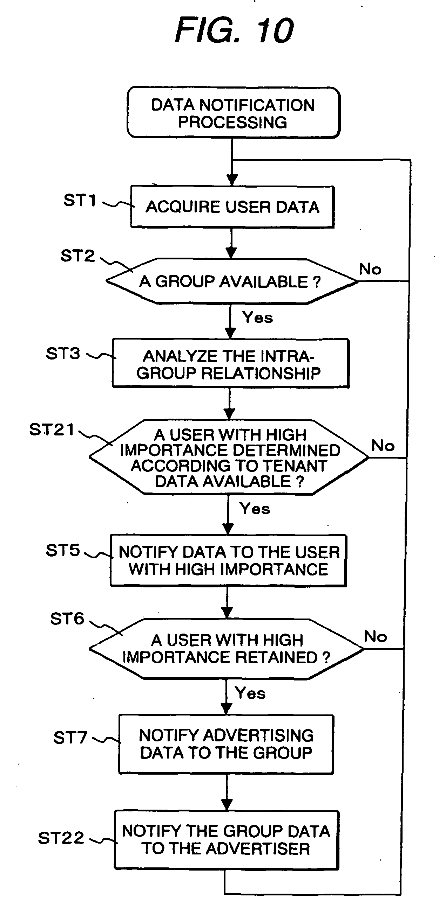

Hereinafter, a second embodiment according to the present invention will be described with reference to Fig. 8 and Fig. 10.

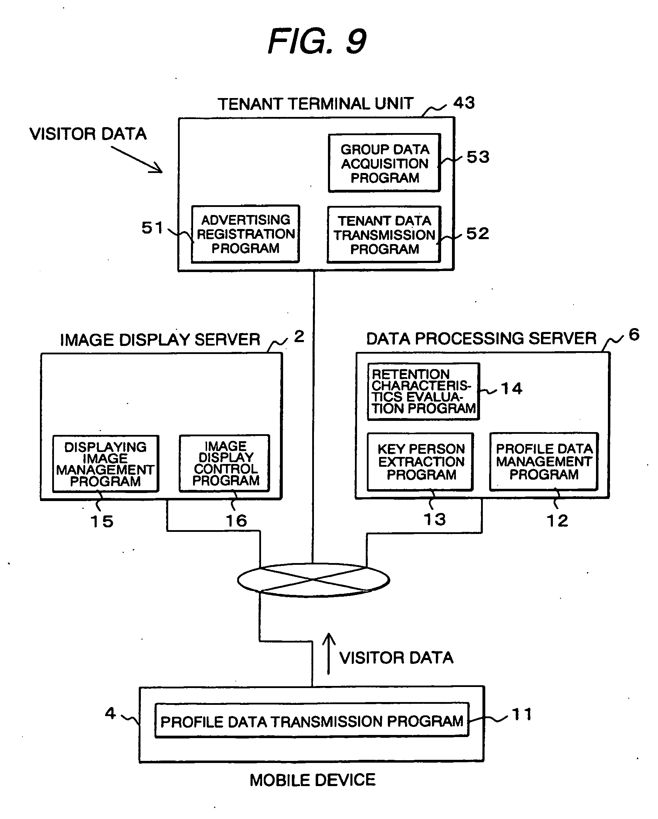

First, a configuration of a data notification system according to the second embodiment of the present invention will be described with reference to Figs. 8 and 9.

Fig. 8 is a configuration diagram of the data notification system according to the second embodiment of the present invention.

Fig. 9 is a software configuration diagram of the data notification system according to the second embodiment of the present invention.

The embodiment refers to a system wherein data on tenants which are connected via a network is provided, according to the statuses of groups of users located in the vicinity of the display unit, by a display unit installed in a public space to which many users visit.

The data notification system shown in Fig. 8 is a system which is realized by adding a tenant 41, an advertiser 42, a tenant terminal unit 43 and an in-tenant camera 44 to the system shown in Fig. 1.

The tenant 41 is a tenant owned by the advertiser 42, and the users 3 visit thereto as customers. For example, the tenant 41 can be a coffee house, a Japanese-style bar, a food store, a clothing store, a barber, a beauty shop, an amusement arcade, etc. The advertiser 42 will make advertising on the display unit 1 by using the tenant terminal unit 43. The in-tenant camera 44 is used to take pictures of the status in the shop.

The software configuration of the data notification system of the embodiment is shown in Fig. 9.

The data notification system shown in Fig. 9 is a system which is realized by adding an advertising registration program 51, a tenant data transmission program 52, and a group data acquisition program 53 to the data notification system shown in Fig. 2. Either of these programs runs on the tenant terminal unit 43.

The advertising registration program 51 registers advertising set out by the advertiser 42 to the displaying image management program 15.

The tenant data transmission program 52 notifies tenant data in responding to a request from the key person extraction program 13. The group data acquisition program 53 acquires data on the group in the staying status from the staying characteristics evaluation program 14, and the program 53 also sends a notification to the advertiser 42.

Next, processing of the data notification system according to the second embodiment of the present invention will be described with reference to Fig. 10.

Fig. 10 is a flow chart showing processes of the data notification system according to the second embodiment of the present invention.

As with the first embodiment, the intra-group relationship is analyzed (ST3) after processing acquisition of user data (ST1) and judgment of a group (ST2). Then, according to the tenant data, a judgment is made as to whether a user having high importance is available (ST21). Here, in this step, the key person extraction program 13 acquires tenant data by using the tenant data transmission program 52 for a judgment whether a user having high importance is available or not. Here, the visitor data in the tenant 41 is formatted for storage in the profiles DB 8 and registered therein.

For example, for a case where data is acquired with a camera and is written in the profile data fields shown in Fig. 3, data in the field of the age 21 will be stated with an extended range, and the fields of the group ID 25, the user ID 21 and the relationship 24 will be left blank. From the data, one or more fields of the gender 23 and the age 22 of visitors among those in the tenant 41 are chosen. When a user of a group satisfying the values that are found to be most redundant in the data is available, the user is determined to have high importance. Alternatively, visitor data may be set out based on the data on users who have finished paying bills at the pay counter. Alternatively, in addition to the visitors at the time, history data for one hour, for example, may be set out as visitor data. When it is judged that a user having high importance is available in step ST21, the process goes to step ST5. When it is not judged a user having high importance is available, the process goes to step ST1. Further, when advertising data is notified to a group (ST7), the process goes to step ST22, and data on the group to which advertising is notified to the advertiser 42 via the group data acquisition program 53 (ST22). Thereafter, the process returns to ST1.

### [Applications of the Present Invention]

According to the present invention, in a data notification system that is installed in a place of a public space to which many people visit, it is possible, while paying a conscious attention to a user having high importance in the group, to notify data to users who visit a shop in a group to make the group to stay in a place where the group can access the data more frequently. Consequently, the present invention can be applied to intended purposes which require provision of data to many users in a public space, etc.

## Claims

1. A data notification method for a system comprising:
a data acquisition device (5) to acquire data of an intended person (3) to whom the data is notified;
a data notification device (1) to notify the data to the intended person (3); and
a data processing server (6) which is connected to said data acquisition device (5) and said data notification device (1) and processes data acquired from said intended person (3),
said method comprising the steps of:
allowing (ST1) said data notification device (1) to acquire data of said intended person (3),
**characterised by** the steps of:
allowing (ST2) said data processing server (6) to make a judgement as to whether or not a plurality of intended persons (3) to whom the data is notified form a group based on the data of said intended person acquired from said data acquisition device (5);
calculating (ST3) the level of importance of the intended persons (3) judged to be forming a group, i.e. the influential power of the intended persons on the other group members, based on the relation between the persons of the group according to profile data of the intended persons acquired from said data acquisition device (5); and
allowing (ST5) said data notification device (1) to notify specific data to the intended person (3) who is determined to have the highest level of importance.

2. The method of claim 1, wherein, in the step (ST2) of making a judgement as to whether said plurality of intended persons (3) form a group or not, a judgement is made that intended persons to whom the data is notified form a group,
when a relationship is found among said intended persons (3) based on profile data owned by said intended persons; or,
when said intended persons (3) are present in the same area for a specific period of time, in the same area in a same time zone, or in a certain number or more of areas all together, as viewed from the positional relationship with said data acquisition device (5) or said data notification device (1).

3. The method of claim 1, wherein the data of the intended person (3) to be acquired from said data acquisition device (5) includes at least one of:
attribute data of the intended person (3);
location data of the intended person (3);
movement data of the intended person (3);
position-related data with other persons in a group to whom the data is notified;
action data of the intended person (3); and
view-line data of the intended person (3).

4. The method of claim 1, further comprising the steps of:
making (ST6) a judgement that the intended person (3) who is determined to have high importance is in a staying status, in view of the positional relationship with said data acquisition device (5) or said data notification device (1); and
executing (ST7) data notification by using said data notification device (1) to all said intended persons (3) who are determined to have high importance, or to intended persons other than said intended persons who are determined to have high importance, when said intended persons who are determined to have high importance is judged to be in a staying status.

5. The method of claim 4, wherein said intended persons (3) who are determined to have high importance is judged to be in a staying status based on the positional relationship with said data acquisition device (5) or said data notification device (1), when at least one of the following conditions is satisfied:
said intended persons (3) who are determined to have high importance have been in the same area for a certain period of time or longer when viewed from said data acquisition device (5) or said data notification device (1);
said intended persons (3) who are determined to have high importance have reduced a distance from said data acquisition device (5) or said data notification device (1) for a certain period of time or longer;
said intended persons (3) who are determined to have high importance have come closer to said data acquisition device (5) or said data notification device (1) within a certain distance; or
said intended persons (3) who are determined to have high importance have made an input on said data acquisition device (5) or said data notification device (1).

6. The method of claim 1, further comprising the steps of:
making (ST6) a judgement that said group is in a staying status based on the positional relationship with said data acquisition device (5) or said data notification device (1); and
when said group is in a staying status, executing (ST7) data notification by using said data notification device (1) to all said intended persons (3) forming a group to whom the data is notified or to intended persons other than said intended persons who are determined to have high importance.

7. The method of claim 6, wherein said group is judged to be in a staying status when at least one of the following conditions is satisfied:
a certain number or more of the intended persons (3) in said group or all said intended persons in said group have been in the same area for a specific period of time or longer as viewed from said data acquisition device (5) or said data notification device (1);
a certain number or more of the intended persons (3) in said group or all said intended persons in said group have reduced a distance for a specific period of timer longer from said data acquisition device (5) or said data notification device (1);
a certain number or more of the intended persons (3) in said group or all said intended persons in said group have come closer to said data acquisition device (5) or said data notification device (1) within a certain distance; and
said intended persons (3) who are determined to have high importance have made an input on said data acquisition device (5) or said data notification device (1).

8. A data notification system comprising:
a data acquisition device (5) to acquire data of an intended person (3) to whom the data is notified;
a data notification device (1) to notify the data to the intended person (3); and
a data processing server (6) which is connected to said data acquisition device (5) and said data notification device (1) and is adapted to process data acquired from said intended person (3),
wherein said data acquisition device (5) is adapted to acquire data of said intended person (3),
**characterised in that**
said data processing server (6) is adapted to make a judgement as to whether or not a plurality of said intended persons (3) form a group based on said data of the intended person acquired by said data acquisition device (5),
said data processing server (6) is adapted to calculate the level of importance of intended persons (3) judged to be forming a group, i.e. the influential power of the intended persons on the other group members, based on the relation between the persons of the group according to profile data of the intended persons acquired from said data acquisition device (5), and
said data notification device (1) is adapted to notify specific data to the intended person (3) who is determined to have the highest level of importance.

9. The system of claim 8, wherein said data notification device (1) is adapted to execute data notification to said intended persons (3) by using at least one of audio data and image data.

10. The system of claim 8, wherein:
said data processing server (6) is adapted to make a judgement that said intended persons (3) are in a state of staying based on the positional relationship with said data acquisition device (5) or said data notification device (1), when at least one of the following conditions is satisfied:
said intended persons (3) who are determined to have high importance have been in the same area for a certain period of time or longer when viewed from said data acquisition device (5) or said data notification device (1);
said intended persons (3) who are determined to have high importance have reduced a distance from said data acquisition device (5) or said data notification device (1) for a certain period of time or longer;
said intended persons (3) who are determined to have high importance have come closer to said data acquisition device (5) or said data notification device (1) within a certain distance; and
said intended persons (3) who are determined to have high importance have made an input on said data acquisition device (5) or said data notification device (1); and
when said intended persons (3) who are determined to have high importance are judged to have been in a staying status, said data processing server (6) is adapted to execute data notification by using said data notification device (1) to all said intended persons forming a group or to intended persons other than said intended persons who are determined to have high importance.

11. The system of claim 10, wherein said data processing server (6) is adapted to make association with the data to be notified by using said data notification device (1) at points before and after said intended persons (3) who are determined to have high importance are in a staying status.

12. The system of claim 8, wherein said data processing server (6) is adapted to make different modifications in the notification position, the size and the amount of data between data to be notified to said intended persons (3) who are determined to have high importance before said intended persons who are determined to have high importance are in a staying status, and data to be notified to said intended persons after said intended persons who are determined to have high importance have been in a staying status.

13. The system of claim 12, wherein, when a modification is made to data to be notified to said intended persons (3), said data processing server (6) is adapted to control the data notification device (1) such that the data, which is to be notified to said intended persons after said intended persons who are determined to have high importance has been in a staying status, is notified before said intended persons who are determined to have high importance is in a staying status, by displaying such data at a position which satisfies at least one of the following positions of the upper, the lower, the right side and the left side of the displayed data that is to be notified to said intended persons.

14. The system of claim 12, wherein, when a modification is made to data to be notified to said intended persons (3), said data processing server (6) is adapted to control the data notification device (1) such that the data, which is to be notified to said intended persons after said intended persons who are determined to have high importance has been in a staying status, is notified by displaying such data at a position which satisfies at least one position of:
the forward, the backward, the right side and the left side of the intended persons (3) who are determined to have high importance; and
the forward and the backward side of the moving direction of the intended persons (3) who are determined to have high importance.

15. The system of claim 12, wherein, when a modification is made to data to be notified to said intended persons (3), said data processing server (6) is adapted to control the data notification device (1) such that data notification is executed by displaying data, which is to be notified to said intended persons after said intended persons who are determined to have high importance has been in a staying status, in the vicinity of a location on an extension of a line connecting intended persons other than said intended persons who are determined to have high importance in said group.

16. The system of claim 12, wherein said data notification device (1) is adapted to execute two-way data exchange with said intended persons (3) at a time point before the intended persons who are determined to have high importance are in a staying status, and execute one-way data notification at a time point after the intended persons who are determined to have high importance have been in a staying status.

17. The system of claim 8, wherein:
said data processing server (6) is adapted to make a judgement that said group is in a staying status as viewed from the positional relationship with said data acquisition device (5) or said data notification device (1), when at least one of the following conditions is satisfied:
a certain number or more of the intended persons (3) in said group or all said intended persons in said group have been in the same area for a specific period of time or longer as viewed from said data acquisition device (5) or said data notification device (1);
a certain number or more of the intended persons (3) in said group or all said intended persons in said group have reduced a distance for a specific period of time or longer from said data acquisition device (5) or said data notification device (1);
a certain number or more of the intended persons (3) in said group or all said intended persons in said group have come closer to said data acquisition device (5) or said data notification device (1) within a certain distance; and
said intended persons (3) who are determined to have high importance have made an input on said data acquisition device (5) or said data notification device (1); and
when the judgement is made that said group is in a staying status, said data notification device (1) is adapted to execute data notification to all said intended persons (3) forming a group or to intended persons other than said intended persons who are determined to have high importance.

18. The system of claim 17, wherein said data notification device (1) is adapted to make an association with the data to be notified at points before and after said group is in a staying status.

19. The system of claim 17, wherein said data notification device (1) is adapted to make modifications of the notification position, the size and the amount of data between data to be notified to said intended persons (3) before said group is in a staying status, and data to be notified to said intended persons after said group has been in a staying status.

20. The system of claim 17, wherein, when a modification is made to data to be notified to said intended persons (3), said data processing server (6) is adapted to control the data notification device (1) such that the data, which is notified to said intended persons after said group has been in a staying status, is notified by displaying such data at a position which satisfies at least one position of the upper, the lower, the right side and the left side of the displayed data that is to be notified to said intended persons before said group is in a staying status.

21. The system of claim 17, wherein, when a modification is made to data to be notified to said intended persons (3), said data processing server (6) is adapted to control the data notification device (1) such that the data, which is to be notified to said intended persons after said group has been in a staying status, is notified by displaying such data at a position which satisfies at least one position of:
the forward, the backward, the right side and the left side of the intended persons (3) who are determined to have high importance; and
the forward and the backward side of the moving direction of the intended persons (3) who are determined to have high importance.

22. The system of claim 17, wherein, when a modification is made to data to be notified to said intended persons (3), said data processing server (6) is adapted to control the data notification device (1) such that data notification is executed by displaying data, which is to be notified to said intended persons after said group has been in a staying status, in the vicinity of a location on an extension of a line connecting intended persons other than said intended persons who are determined to have high importance in said group.

23. The system of claim 17, wherein said data notification device (1) is adapted to execute two-way data exchange with said intended persons (3) at a time point before said group is in a staying status, and execute one-way data notification to said intended persons at a time point after said group has been in a staying status.

24. The method of claim 1, wherein said intended person (3) of high importance is determined based on at least one of:
the fact that the intended person is most attracting attentions of the other group members;
tracking of visual lines of said intended persons by using image recognition art; and
the fact that the intended person belongs to the most popular category based on data on visits of the intended persons.

25. The method of claim 1 wherein,
when said group is a family, the person having the lowest age is determined as the intended person of high importance, and
when said group is a company, the person having the highest order is determined as the intended person of high importance.

26. The system of claim 8, wherein said processing server (6) is adapted to determine said intended person (3) of high importance based on at least one of:
the fact that the intended person is most attracting attentions of the other group members;
tracking of visual lines of said intended persons by using image recognition art; and
the fact that the intended person belongs to the most popular category based on data on visits of the intended persons.

27. The system of claim 8, wherein
when said group is a family, said processing server (6) is adapted to determine the person having the lowest age as the intended person of high importance, and
when said group is a company, said processing server (6) is adapted to determine the person having the highest order as the intended person of high importance.

## Patentansprüche

1. Datenmitteilungsverfahren für ein System mit:
einer Datenbeschaffungsvorrichtung (5) zum Beschaffen von Daten einer gewünschten Person (3), der die Daten mitzuteilen sind;
einer Datenmitteilungsvorrichtung (1) zum Mitteilen der Daten an die gewünschte Person (3); und
einem Datenverarbeitungsserver (6), der an die Datenbeschaffungsvorrichtung (5) und die Datenmitteilungsvorrichtung (1) angeschlossen ist und die von der gewünschten Person (3) beschafften Daten verarbeitet,
wobei in den Schritten des Verfahrens:
der Datenmitteilungsvorrichtung (1) erlaubt (ST1) wird, Daten der gewünschten Person (3) zu beschaffen,
**gekennzeichnet durch** Schritte, in denen:
dem Datenverarbeitungsserver (6) erlaubt (ST2) wird, eine Beurteilung durchzuführen, ob mehrere gewünschte Personen (3), denen die Daten mitzuteilen sind, basierend auf den Daten der gewünschten Person, die von der Datenbeschaffungsvorrichtung (5) beschafft wurden, eine Gruppe bilden;
die Wichtigkeitsstufe der als Gruppe beurteilten gewünschten Personen (3), d.h. die Einflusskraft der gewünschten Personen auf die anderen Gruppenmitglieder, basierend auf der Beziehung zwischen den Personen der Gruppe gemäß Profildaten der gewünschten Personen berechnet (ST3) wird, die von der Datenbeschaffungsvorrichtung (5) beschafft wurden; und
der Datenmitteilungsvorrichtung (1) erlaubt (ST5) wird, spezifische Daten zu der gewünschten Person (3) mitzuteilen, für die die höchste Wichtigkeitsstufe festgestellt wurde.

2. Verfahren nach Anspruch 1, wobei in dem Schritt (ST2) der Durchführung einer Beurteilung, ob die mehreren gewünschten Personen (3) eine Gruppe bilden, eine Beurteilung durchgeführt wird, dass gewünschte Personen, denen die Daten mitgeteilt werden, eine Gruppe bilden,
wenn eine Beziehung zwischen den gewünschten Personen (3) basierend auf zu den gewünschten Personen gehörenden Profildaten gefunden wird; oder
wenn die gewünschten Personen (3) sich für eine spezifische Zeitspanne in der gleichen Region, in der gleichen Region in einer gleichen Zeitzone, oder alle zusammen in mindestens einer bestimmten Anzahl von Regionen aufhalten, gesehen von der Positionsbeziehung mit der Datenbeschaffungsvorrichtung (5) oder der Datenmitteilungsvorrichtung (1).

3. Verfahren nach Anspruch 1, wobei die Daten der gewünschten Person (3), die von der Datenbeschaffungsvorrichtung (5) zu beschaffen sind, wenigstens eine der folgenden Daten aufweisen:
Attributdaten der gewünschten Person (3);
Ortsdaten der gewünschten Person (3);
Bewegungsdaten der gewünschten Person (3);
Positionsbeziehungsdaten mit anderen Personen in einer Gruppe, der die Daten mitzuteilen sind;
Aktionsdaten der gewünschten Person (3); und
Sichtliniendaten der gewünschten Person (3).

4. Verfahren nach Anspruch 3, in dessen Schritten ferner:
eine Beurteilung durchgeführt (ST6) wird, dass die gewünschte Person (3), für die hohe Wichtigkeit festgestellt wurde, in einem Bleibestatus hinsichtlich der Positionsbeziehung mit der Datenbeschaffungsvorrichtung (5) oder der Datenmitteilungsvorrichtung (1) ist; und
eine Datenmitteilung durchgeführt (ST7) wird, indem die Datenmitteilungsvorrichtung (1) zu allen gewünschten Personen (3), für die eine hohe Wichtigkeit festgestellt wurde, oder zu gewünschten Personen, die verschieden von denen sind, für die eine hohe Wichtigkeit festgestellt wurde, verwendet wird, wenn die gewünschten Personen, für die eine hohe Wichtigkeit festgestellt wurde, als in einem Bleibestatus befindlich beurteilt wurden.

5. Verfahren nach Anspruch 4, wobei die gewünschten Personen (3), für die eine hohe Wichtigkeit festgestellt wurde, basierend auf der Positionsbeziehung mit der Datenbeschaffungsvorrichtung (5) oder der Datenmitteilungsvorrichtung (1) als in einem Bleibestatus befindlich beurteilt werden, wenn wenigstens eine der folgenden Bedingungen erfüllt ist:
die gewünschten Personen (3), für die eine hohe Wichtigkeit festgestellt wurde, waren mindestens für eine bestimmte Zeitspanne in der gleichen Region, gesehen von der Datenbeschaffungsvorrichtung (5) oder der Datenmitteilungsvorrichtung (1);
die gewünschten Personen (3), für die eine hohe Wichtigkeit festgestellt wurde, haben eine Distanz von der Datenbeschaffungsvorrichtung (5) oder der Datenmitteilungsvorrichtung (1) mindestens für eine bestimmte Zeitspanne reduziert;
die gewünschten Personen (3), für die eine hohe Wichtigkeit festgestellt wurde, sind innerhalb einer bestimmten Distanz näher an die Datenbeschaffungsvorrichtung (5) oder die Datenmitteilungsvorrichtung (1) gekommen; oder
die gewünschten Personen (3), für die eine hohe Wichtigkeit festgestellt wurde, haben eine Eingabe in die Datenbeschaffungsvorrichtung (5) oder die Datenmitteilungsvorrichtung (1) gemacht.

6. Verfahren nach Anspruch 1, in dessen Schritten ferner:
basierend auf der Positionsbeziehung mit der Datenbeschaffungsvorrichtung (5) oder der Datenmitteilungsvorrichtung (1) eine Beurteilung durchgeführt (ST6) wird, dass sich die Gruppe in einem Bleibestatus befindet; und
wenn die Gruppe in einem Bleibestatus ist, eine Datenmitteilung durchgeführt (ST7) wird, indem die Datenmitteilungsvorrichtung (1) zu allen gewünschten Personen (3) verwendet wird, die eine Gruppe bilden, der Daten mitzuteilen sind, oder zu gewünschten Personen, die sich von den gewünschten Personen unterscheiden, für die eine hohe Wichtigkeit festgestellt wurde.

7. Verfahren nach Anspruch 6, wobei die Gruppe als in einem Bleibestatus befindlich beurteilt wird, wenn wenigstens eine der folgenden Bedingungen erfüllt ist:
mindestens eine bestimmte Anzahl von gewünschten Personen (3) in der Gruppe oder alle gewünschten Personen (3) in der Gruppe waren mindestens für eine bestimmte Zeitspanne in der gleichen Region, gesehen von der Datenbeschaffungsvorrichtung (5) oder der Datenmitteilungsvorrichtung (1);
mindestens eine bestimmte Anzahl von gewünschten Personen (3) in der Gruppe oder alle gewünschten Personen (3) in der Gruppe haben eine Distanz von der Datenbeschaffungsvorrichtung (5) oder der Datenmitteilungsvorrichtung (1) mindestens für eine bestimmte Zeitspanne reduziert;
mindestens eine bestimmte Anzahl von gewünschten Personen (3) in der Gruppe oder alle gewünschten Personen (3) in der Gruppe sind innerhalb einer bestimmten Distanz näher an die Datenbeschaffungsvorrichtung (5) oder die Datenmitteilungsvorrichtung (1) gekommen; oder
die gewünschten Personen (3), für die eine hohe Wichtigkeit festgestellt wurde, haben eine Eingabe in die Datenbeschaffungsvorrichtung (5) oder die Datenmitteilungsvorrichtung (1) gemacht.

8. Datenmitteilungssystem mit:
einer Datenbeschaffungsvorrichtung (5) zum Beschaffen von Daten einer gewünschten Person (3), der die Daten mitzuteilen sind;
einer Datenmitteilungsvorrichtung (1) zum Mitteilen der Daten an die gewünschte Person (3); und
einem Datenverarbeitungsserver (6), der an die Datenbeschaffungsvorrichtung (5) und die Datenmitteilungsvorrichtung (1) angeschlossen und dazu ausgelegt ist, die von der gewünschten Person (3) beschafften Daten zu verarbeiten,
wobei die Datenbeschaffungsvorrichtung (5) dazu ausgelegt ist, Daten der gewünschten Person (3) zu beschaffen,
**dadurch gekennzeichnet, dass**
der Datenverarbeitungsserver (6) dazu ausgelegt ist, eine Beurteilung durchzuführen, ob mehrere gewünschte Personen (3), denen die Daten mitzuteilen sind, basierend auf den Daten der gewünschten Person, die von der Datenbeschaffungsvorrichtung (5) beschafft wurden, eine Gruppe bilden;
der Datenverarbeitungsserver (6) dazu ausgelegt ist, die Wichtigkeitsstufe der als Gruppe beurteilten gewünschten Personen (3), d.h. die Einflusskraft der gewünschten Personen auf die anderen Gruppenmitglieder, basierend auf der Beziehung zwischen den Personen der Gruppe gemäß Profildaten der gewünschten Personen zu berechnen, die von der Datenbeschaffungsvorrichtung (5) beschafft wurden; und
der Datenmitteilungsvorrichtung (1) dazu ausgelegt ist, spezifische Daten zu der gewünschten Person (3) mitzuteilen, für die die höchste Wichtigkeitsstufe festgestellt wurde.

9. System nach Anspruch 8, wobei die Datenmitteilungsvorrichtung (1) dazu ausgelegt ist, Datenmitteilung zu den gewünschten Personen (3) durchzuführen, indem Audiodaten und/oder Bilddaten verwendet werden.

10. System nach Anspruch 8, wobei
der Datenverarbeitungsserver (6) dazu ausgelegt ist, zu beurteilen, dass die gewünschten Personen (3), für die eine hohe Wichtigkeit festgestellt wurde, basierend auf der Positionsbeziehung mit der Datenbeschaffungsvorrichtung (5) oder der Datenmitteilungsvorrichtung (1) in einem Bleibestatus ist, wenn wenigstens eine der folgenden Bedingungen erfüllt ist:
die gewünschten Personen (3), für die eine hohe Wichtigkeit festgestellt wurde, waren mindestens für eine bestimmte Zeitspanne in der gleichen Region, gesehen von der Datenbeschaffungsvorrichtung (5) oder der Datenmitteilungsvorrichtung (1);
die gewünschten Personen (3), für die eine hohe Wichtigkeit festgestellt wurde, haben eine Distanz von der Datenbeschaffungsvorrichtung (5) oder der Datenmitteilungsvorrichtung (1) mindestens für eine bestimmte Zeitspanne reduziert;
die gewünschten Personen (3), für die eine hohe Wichtigkeit festgestellt wurde, sind innerhalb einer bestimmten Distanz näher an die Datenbeschaffungsvorrichtung (5) oder die Datenmitteilungsvorrichtung (1) gekommen; oder
die gewünschten Personen (3), für die eine hohe Wichtigkeit festgestellt wurde, haben eine Eingabe in die Datenbeschaffungsvorrichtung (5) oder die Datenmitteilungsvorrichtung (1) gemacht.

11. System nach Anspruch 10, wobei der Datenverarbeitungsserver (6) dazu ausgelegt ist, eine Beziehung mit den mitzuteilenden Daten herzustellen, indem die Datenmitteilungsvorrichtung (1) an Zeitpunkten verwendet wird bevor und nachdem die gewünschten Personen (3), für die eine hohe Wichtigkeit festgestellt wurde, sich in einem Bleibestatus befinden.

12. System nach Anspruch 8, wobei der Datenverarbeitungsserver (6) dazu ausgelegt ist, verschiedene Modifikationen in der Mitteilungsposition, der Größe und dem Datenumfang vorzunehmen zwischen den zu den gewünschten Personen (3), für die eine hohe Wichtigkeit festgestellt wurde, mitzuteilenden Daten, bevor die gewünschten Personen, für die eine hohe Wichtigkeit festgestellt wurde, sich in einem Bleibestatus befinden, und Daten, die zu den gewünschten Personen mitzuteilen sind, nachdem die gewünschten Personen, für die eine hohe Wichtigkeit festgestellt wurde, sich in einem Bleibestatus befinden.

13. System nach Anspruch 12, wobei wenn zu den gewünschten Personen (3) mitzuteilende Daten modifiziert wurden, der Datenverarbeitungsserver (6) dazu ausgelegt ist, die Datenmitteilungsvorrichtung (1) so zu steuern, dass die Daten, die den gewünschten Personen mitzuteilen sind, nachdem die gewünschten Personen, für die eine hohe Wichtigkeit festgestellt wurde, sich in einem Bleibestatus befinden, mitgeteilt werden, bevor die gewünschten Personen, für die eine hohe Wichtigkeit festgestellt wurde, sich in einem Bleibestatus befinden, indem solche Daten an einer Position wiedergegeben werden, die wenigstens eine der folgenden Positionen der oberen, der unteren, der rechten und der linken Seite der angezeigten Daten darstellt, die an die gewünschten Personen mitzuteilen sind.

14. System nach Anspruch 12, wobei wenn die zu den gewünschten Personen (3) mitzuteilenden Daten modifiziert wurden, der Datenverarbeitungsserver (6) dazu ausgelegt ist, die Datenmitteilungsvorrichtung (1) so zu steuern, dass die Daten, die den gewünschten Personen mitzuteilen sind, nachdem die gewünschten Personen, für die eine hohe Wichtigkeit festgestellt wurde, sich in einem Bleibestatus befunden haben, mitgeteilt werden, indem solche Daten an einer Position wiedergegeben werden, die wenigstens eine der folgenden Positionen darstellt:
die vorwärtige, die rückwärtige, die rechte und die linke Seite der gewünschten Personen (3), für die eine hohe Wichtigkeit festgestellt wurde; und
die vorwärtige und die rückwärtige Seite der Bewegungsrichtung der gewünschten Personen (3), für die eine hohe Wichtigkeit festgestellt wurde.

15. System nach Anspruch 12, wobei wenn die zu den gewünschten Personen (3) mitzuteilenden Daten modifiziert wurden, der Datenverarbeitungsserver (6) dazu ausgelegt ist, die Datenmitteilungsvorrichtung (1) so zu steuern, dass die Datenmitteilung durchgeführt wird, indem Daten, die zu den gewünschten Personen mitzuteilen sind, nachdem die gewünschten Personen, für die eine hohe Wichtigkeit festgestellt wurde, sich in einem Bleibestatus befunden haben, in der Nähe eines Ortes auf einer Verlängerung einer Linie wiedergegeben werden, die gewünschte Personen verbindet, die sich von den gewünschten Personen, für die eine hohe Wichtigkeit in der Gruppe festgestellt wurde, unterscheiden.

16. System nach Anspruch 12, wobei die Datenmitteilungsvorrichtung (1) dazu ausgelegt ist, einen wechselseitigen Datenaustausch mit den gewünschten Personen (3) zu einem Zeitpunkt durchzuführen, bevor die gewünschten Personen, für die eine hohe Wichtigkeit festgestellt wurde, sich in einem Bleibestatus befinden, und eine einseitige Datenmitteilung zu einem Zeitpunkt durchzuführen, nachdem die gewünschten Personen, für die eine hohe Wichtigkeit festgestellt wurde, sich in einem Bleibestatus befunden haben.

17. System nach Anspruch 8, wobei
der Datenverarbeitungsserver (6) dazu ausgelegt ist, zu beurteilen, dass sich die Gruppe, gesehen von der Positionsbeziehung mit der Datenbeschaffungsvorrichtung (5) oder der Datenmitteilungsvorrichtung (1), in einem Bleibestatus befindet, wenn wenigstens eine der folgenden Bedingungen erfüllt ist:
mindestens eine bestimmte Anzahl von gewünschten Personen (3) in der Gruppe oder alle gewünschten Personen (3) in der Gruppe waren mindestens für eine bestimmte Zeitspanne in der gleichen Region, gesehen von der Datenbeschaffungsvorrichtung (5) oder der Datenmitteilungsvorrichtung (1);
mindestens eine bestimmte Anzahl von gewünschten Personen (3) in der Gruppe oder alle gewünschten Personen (3) in der Gruppe haben eine Distanz von der Datenbeschaffungsvorrichtung (5) oder der Datenmitteilungsvorrichtung (1) mindestens für eine bestimmte Zeitspanne reduziert;
mindestens eine bestimmte Anzahl von gewünschten Personen (3) in der Gruppe oder alle gewünschten Personen (3) in der Gruppe sind innerhalb einer bestimmten Distanz näher an die Datenbeschaffungsvorrichtung (5) oder die Datenmitteilungsvorrichtung (1) gekommen; oder
die gewünschten Personen (3), für die eine hohe Wichtigkeit festgestellt wurde, haben eine Eingabe in die Datenbeschaffungsvorrichtung (5) oder die Datenmitteilungsvorrichtung (1) gemacht, und
wenn beurteilt wurde, dass die Gruppe in einem Bleibestatus ist, die Datenmitteilungsvorrichtung (1) dazu ausgelegt ist, eine Datenmitteilung zu allen gewünschten Personen (3) durchzuführen, die eine Gruppe bilden, oder zu gewünschten Personen, die sich von den gewünschten Personen unterscheiden, für die eine hohe Wichtigkeit festgestellt wurde.

18. System nach Anspruch 17, wobei die Datenmitteilungsvorrichtung (1) dazu ausgelegt ist, eine Beziehung mit den mitzuteilenden Daten an Zeitpunkten herzustellen, bevor und nachdem sich die Gruppe in einem Bleibestatus befindet.

19. System nach Anspruch 17, wobei die Datenmitteilungsvorrichtung (1) dazu ausgelegt ist, Modifikationen in der Mitteilungsposition, der Größe und dem Datenumfang vorzunehmen zwischen den zu den gewünschten Personen (3) mitzuteilenden Daten, bevor sich die Gruppe in einem Bleibestatus befindet, und Daten, die zu den gewünschten Personen mitzuteilen sind, nachdem sich die Gruppe in einem Bleibestatus befindet.

20. System nach Anspruch 17, wobei wenn zu den gewünschten Personen (3) mitzuteilende Daten modifiziert wurden, der Datenverarbeitungsserver (6) dazu ausgelegt ist, die Datenmitteilungsvorrichtung (1) so zu steuern, dass die Daten, die den gewünschten Personen mitzuteilen sind, nachdem sich die Gruppe in einem Bleibestatus befand, mitgeteilt werden, indem solche Daten an einer Position wiedergegeben werden, die wenigstens eine der folgenden Positionen der oberen, der unteren, der rechten und der linken Seite der angezeigten Daten darstellt, bevor sich die Gruppe in einem Bleibestatus befindet.

21. System nach Anspruch 17, wobei wenn die zu den gewünschten Personen (3) mitzuteilenden Daten modifiziert wurden, der Datenverarbeitungsserver (6) dazu ausgelegt ist, die Datenmitteilungsvorrichtung (1) so zu steuern, dass die Daten, die den gewünschten Personen mitzuteilen sind, nachdem sich die Gruppe in einem Bleibestatus befand, mitgeteilt werden, indem solche Daten an einer Position wiedergegeben werden, die wenigstens eine der folgenden Positionen darstellt:
die vorwärtige, die rückwärtige, die rechte und die linke Seite der gewünschten Personen (3), für die eine hohe Wichtigkeit festgestellt wurde; und
die vorwärtige und die rückwärtige Seite der Bewegungsrichtung der gewünschten Personen (3), für die eine hohe Wichtigkeit festgestellt wurde.

22. System nach Anspruch 17, wobei wenn die zu den gewünschten Personen (3) mitzuteilenden Daten modifiziert wurden, der Datenverarbeitungsserver (6) dazu ausgelegt ist, die Datenmitteilungsvorrichtung (1) so zu steuern, dass die Datenmitteilung durchgeführt wird, indem Daten, die zu den gewünschten Personen mitzuteilen sind, nachdem sich die Gruppe in einem Bleibestatus befand, in der Nähe eines Ortes auf einer Verlängerung einer Linie wiedergegeben werden, die gewünschte Personen verbindet, die sich von den gewünschten Personen, für die eine hohe Wichtigkeit in der Gruppe festgestellt wurde, unterscheiden.

23. System nach Anspruch 17, wobei die Datenmitteilungsvorrichtung (1) dazu ausgelegt ist, einen wechselseitigen Datenaustausch mit den gewünschten Personen (3) zu einem Zeitpunkt durchzuführen, bevor sich die Gruppe in einem Bleibestatus befindet, und eine einseitige Datenmitteilung zu einem Zeitpunkt durchzuführen, nachdem sich die Gruppe in einem Bleibestatus befunden hat.

24. Verfahren nach Anspruch 1, wobei die gewünschte Person (3) hoher Wichtigkeit basierend auf wenigstens einer der folgenden Gegebenheiten bestimmt wird:
der Tatsache, dass die gewünschte Person die meiste Aufmerksamkeit der anderen Gruppenmitglieder auf sich zieht;
dem Verfolgen von Blickrichtungen der gewünschten Personen unter Verwendung einer Bilderkennungstechnik; und
der Tatsache, dass die gewünschte Person zu der populärsten Kategorie basierend auf Besuchsdaten der gewünschten Personen gehört.

25. Verfahren nach Anspruch 1, wobei
wenn die Gruppe eine Familie ist, die Person mit dem niedrigsten Alter als die gewünschte Person hoher Wichtigkeit bestimmt wird, und
wenn die Gruppe eine Firma ist, die Person mit der höchsten Position als die gewünschte Person hoher Wichtigkeit bestimmt wird.

26. System nach Anspruch 8, wobei der Datenverarbeitungsserver (6) dazu ausgelegt ist, die gewünschte Person (3) hoher Wichtigkeit basierend auf wenigstens einer der folgenden Gegebenheiten zu bestimmen:
der Tatsache, dass die gewünschte Person die meiste Aufmerksamkeit der anderen Gruppenmitglieder auf sich zieht;
dem Verfolgen von Blickrichtungen der gewünschten Personen unter Verwendung einer Bilderkennungstechnik; und
der Tatsache, dass die gewünschte Person zu der populärsten Kategorie basierend auf Besuchsdaten der gewünschten Personen gehört.

27. System nach Anspruch 8, wobei
wenn die Gruppe eine Familie ist, der Datenverarbeitungsserver (6) dazu ausgelegt ist, die Person mit dem niedrigsten Alter als die gewünschte Person hoher Wichtigkeit zu bestimmen, und
wenn die Gruppe eine Firma ist, der Datenverarbeitungsserver (6) dazu ausgelegt ist, die Person mit der höchsten Position als die gewünschte Person hoher Wichtigkeit zu bestimmen.

## Revendications

1. Procédé de notification de données pour un système comportant :
un dispositif d'acquisition de données (5) pour acquérir des données d'une personne visée (3) à laquelle les données sont notifiées,
un dispositif de notification de données (1) pour notifier les données à la personne visée (3), et
un serveur de traitement de données (6) lequel est connecté audit dispositif d'acquisition de données (5) et audit dispositif de notification de données (1) et traite des données acquises depuis ladite personne visée (3),
ledit procédé comportant les étapes consistant à :
permettre (ST1) audit dispositif de notification de données (1) d'acquérir des données de ladite personne visée (3),
**caractérisé par** les étapes consistant à :
permettre (ST2) audit serveur de traitement de données (6) de déterminer si oui ou non une pluralité de personnes visées (3) auxquelles les données sont notifiées forment un groupe sur la base des données de ladite personne visée acquises par ledit dispositif d'acquisition de données (5),
calculer (ST3) le niveau d'importance des personnes visées (3) déterminées comme formant un groupe, c'est-à-dire le pouvoir d'influence des personnes visées sur les autres membres du groupe, sur la base de la relation entre les personnes du groupe conformément à des données de profil des personnes visées acquises par ledit dispositif d'acquisition de données (5), et
permettre (ST5) audit dispositif de notification de données (1) de notifier des données spécifiques à la personne visée (3) qui est déterminée comme ayant le niveau d'importance le plus élevé.

2. Procédé selon la revendication 1, dans lequel au cours de l'étape (ST2) consistant à déterminer si ou au non ladite pluralité de personnes visées (3) forment un groupe, il est déterminé que les personnes visées auxquelles les données sont notifiées forment un groupe,
lorsque une relation est établie parmi lesdites personnes visées (3) sur la base des données de profil possédées par lesdites personnes visées, ou
lorsque lesdites personnes visées (3) sont présentes dans la même zone pendant une période de temps spécifique, dans la même zone d'un même fuseau horaire, ou dans un certain nombre de zones ou plus toutes ensembles, comme observé à partir de la relation de position avec ledit dispositif d'acquisition de données (5) ou ledit dispositif de notification de données (1).

3. Procédé selon la revendication 1, dans lequel les données de la personne visée (3) à acquérir depuis ledit dispositif d'acquisition de données (5) incluent au moins une donnée parmi :
des données d'attributs de la personne visée (3),
des données de position de la personne visée (3),
des données de déplacement de la personne visée (3),
des données associées à la position avec d'autres personnes d'un groupe auquel les données sont notifiées,
des données d'action de la personne visée (3), et
des données de perspective de la personne visée (3).

4. Procédé selon la revendication 1, comportant en outre les étapes consistant à :
déterminer (ST6) que la personne visée (3) qui est déterminée comme ayant une importance élevée est dans un état d'immobilité, au vue de la relation de position avec ledit dispositif d'acquisition de données (5) ou ledit dispositif de notification de données (1), et
exécuter (ST7) une notification de données en utilisant ledit dispositif de notification de données (1) pour toutes lesdites personnes visées (3) qui sont déterminées comme ayant une importance élevée, ou pour des personnes visées autres que lesdites personnes visées qui sont déterminées comme ayant une importance élevée, lorsque lesdites personnes visées qui sont déterminées comme ayant une importance élevée sont déterminées comme étant dans un état d'immobilité.

5. Procédé selon la revendication 4, dans lequel lesdites personnes visées (3) qui sont déterminées comme ayant une importance élevée sont déterminées comme étant dans un état d'immobilité sur la base de la relation de position avec ledit dispositif d'acquisition de données (5) ou ledit dispositif de notification de données (1), lorsqu'au moins l'une des conditions suivantes est satisfaite :
lesdites personnes visées (3) qui sont déterminées comme ayant une importance élevée ont été localisées dans la même zone pendant une période de temps particulière ou plus longue lorsque observé depuis ledit dispositif d'acquisition de données (5) ou ledit dispositif de notification de données (1),
lesdites personnes visées (3) qui sont déterminées comme ayant une importance élevée ont réduit la distance par rapport audit dispositif d'acquisition de données (5) ou audit dispositif de notification de données (1) pendant une période de temps particulière ou plus longue,
lesdites personnes visées (3) lesquelles sont déterminées comme ayant une importance élevée se sont rapprochées dudit dispositif d'acquisition de données (5) ou dudit dispositif de notification de données (1) au sein d'une distance particulière, ou
lesdites personnes visées (3) lesquelles sont déterminées comme ayant une importance élevée ont effectué une entrée sur ledit dispositif d'acquisition de données (5) ou ledit dispositif de notification de données (1).

6. Procédé selon la revendication 1, comportant en outre les étapes consistant à :
déterminer (ST6) que ledit groupe est dans un état d'immobilité sur la base de la relation de position avec ledit dispositif d'acquisition de données (5) ou ledit dispositif de notification de données (1), et
lorsque ledit groupe est dans un état d'immobilité, exécuter (ST7) une notification de données en utilisant ledit dispositif de notification de données (1) pour toutes lesdites personnes visées (3) formant un groupe auquel les données sont notifiées ou pour les personnes visées autres que lesdites personnes visées qui sont déterminées comme ayant une importance élevée.

7. Procédé selon la revendication 6, dans lequel ledit groupe est déterminé comme étant dans un état d'immobilité lorsqu'au moins l'une des conditions suivantes est satisfaite :
un certain nombre de personnes visées (3) ou plus dans ledit groupe ou la totalité desdites personnes visées dans ledit groupe ont été localisées dans la même zone pendant une période de temps spécifique ou plus longue comme observé depuis ledit dispositif d'acquisition de données (5) ou ledit dispositif de notification de données (1),
un certain nombre des personnes visées (3) ou plus dans ledit groupe ou la totalité desdites personnes visées dans ledit groupe ont réduit une distance pendant une période de temps spécifique ou plus longue par rapport audit dispositif d'acquisition de données (5) ou audit dispositif de notification de données (1),
un certain nombre des personnes visées (3) ou plus dans ledit groupe ou la totalité desdites personnes visées dans ledit groupe se sont rapprochées dudit dispositif d'acquisition de données (5) ou dudit dispositif de notification de données (1) au sein d'une distance particulière, et
lesdites personnes visées (3) qui sont déterminées comme ayant une importance élevée ont effectué une entrée sur ledit dispositif d'acquisition de données (5) ou ledit dispositif de notification de données (1).

8. Système de notification de données comportant :
un dispositif d'acquisition de données (5) pour acquérir des données d'une personne visée (3) à laquelle les données sont notifiées,
un dispositif de notification de données (1) pour notifier les données à la personne visée (3), et
un serveur de traitement de données (6) lequel est connecté audit dispositif d'acquisition de données (5) et audit dispositif de notification de données (1) et est adapté pour traiter des données acquises depuis ladite personne visée (3),
dans lequel ledit dispositif d'acquisition de données (5) est adapté pour acquérir des données de ladite personne visée (3),
**caractérisé en ce que**
ledit serveur de traitement de données (6) est adapté pour déterminer si oui ou non une pluralité desdites personnes visées (3) forment un groupe sur la base desdites données de la personne visée acquises par ledit dispositif d'acquisition de données (5),
ledit serveur de traitement de données (6) est adapté pour calculer le niveau d'importance des personnes visées (3) déterminées comme formant un groupe, c'est-à-dire le pouvoir d'influence des personnes visées sur les autres membres du groupe, sur la base de la relation entre les personnes du groupe conformément à des données de profil des personnes visées acquises par ledit dispositif d'acquisition de données (5), et
ledit dispositif de notification de données (1) est adapté pour notifier des données spécifiques à la personne visée (3) qui est déterminée comme ayant le niveau d'importance le plus élevé.

9. Système selon la revendication 8, dans lequel ledit dispositif de notification de données (1) est adapté pour exécuter une notification de données auxdites personnes visées (3) en utilisant au moins l'une parmi des données audio et des données d'images.

10. Système selon la revendication 8, dans lequel :
ledit serveur de traitement de données (6) est adapté pour déterminer que lesdites personnes visées (3) sont dans un état d'immobilité sur la base de la relation de position avec ledit dispositif d'acquisition de données (5) ou ledit dispositif de notification de données (1), lorsqu'au moins l'une des conditions suivantes est satisfaite :
lesdites personnes visées (3) qui sont déterminées comme ayant une importance élevée ont été localisées dans la même zone pendant une période de temps particulière ou plus longue lorsque observée depuis ledit dispositif d'acquisition de données (5) ou ledit dispositif de notification de données (1),
lesdites personnes visées (3) lesquelles sont déterminées comme ayant une importance élevée ont réduit une distance par rapport audit dispositif d'acquisition de données (5) ou audit dispositif de notification de données (1) pendant une période de temps particulière ou plus longue,
lesdites personnes visées (3) lesquelles sont déterminées comme ayant une importance élevée se sont rapprochées dudit dispositif d'acquisition de données (5) ou dudit dispositif de notification de données (1) au sein d'une distance particulière, et
lesdites personnes visées (3) lesquelles sont déterminées comme ayant une importance élevée ont effectué une entrée sur ledit dispositif d'acquisition de données (5) ou ledit dispositif de notification de données (1), et
lorsque lesdites personnes visées (3) qui sont déterminées comme ayant une importance élevée sans déterminées comme ayant été dans un état d'immobilité, ledit serveur de traitement de données (6) est adapté pour exécuter une notification de données en utilisant ledit dispositif de notification de données (1) pour toutes lesdites personnes visées formant un groupe ou pour des personnes visées autres que lesdites personnes visées qui sont déterminées comme ayant une importance élevée.

11. Système selon la revendication 10, dans lequel ledit serveur de traitement de données (6) est adapté pour effectuer une association avec les données à notifier en utilisant ledit dispositif de notification de données (1) à des instants avant que lesdites personnes visées (3) qui sont déterminées comme ayant une importance élevée soient dans un état d'immobilité et après qu'elles aient été dans un état d'immobilité.

12. Système selon la revendication 8, dans lequel ledit serveur de traitement de données (6) est adapté pour effectuer différentes modifications dans la position de notification, la taille et la quantité de données entre des données à notifier auxdites personnes visées (3) lesquelles sont déterminées comme ayant une importance élevée avant lesdites personnes visées qui sont déterminées comme ayant une importance élevée dans un état d'immobilité, et des données à notifier auxdites personnes visées après que lesdites personnes visées qui sont déterminées comme ayant une importance élevée aient été dans un état d'immobilité.

13. Système selon la revendication 12, dans lequel, lorsque une modification est apportée à des données à notifier auxdites personnes visées (3), ledit serveur de traitement de données (6) est adapté pour commander le dispositif de notification de données (1) de sorte que les données, lesquelles doivent être notifiées auxdites personnes visées après que lesdites personnes visées qui sont déterminées comme ayant une importance élevée aient été dans un état d'immobilité, sont notifiées avant que lesdites personnes visées qui sont déterminées comme ayant une importance élevée soient dans un état d'immobilité, en affichant ces données à une position qui satisfait au moins l'une des positions suivantes parmi la partie supérieure, la partie inférieure, le côté droit et le côté gauche des données affichées qui doivent être notifiées auxdites personnes visées.

14. Système selon la revendication 12, dans lequel, lorsqu'une modification est apportée à des données à notifier auxdites personnes visées (3), ledit serveur de traitement de données (6) est adapté pour commander le dispositif de notification de données (1) de sorte que les données, lesquelles doivent être notifiées auxdites personnes visées une fois que lesdites personnes visées qui sont déterminées comme ayant une importance élevée ont été dans un état d'immobilité, sont notifiées en affichant ces données à une position qui satisfait au moins une position parmi :
la partie avant, la partie arrière, le côté droit et le côté gauche des personnes visées (3) qui sont déterminées comme ayant une importance élevée, et
la partie avant, la partie arrière, le côté droit et le côté gauche de la direction de déplacement des personnes visées (3) qui sont déterminées comme ayant une importance élevée.

15. Système selon la revendication 12, dans lequel, lorsqu'une modification est apportée à des données à notifier auxdites personnes visées (3), ledit serveur de traitement de données (6) est adapté pour commander le dispositif de notification de données (1) de sorte que la notification de donnée est exécutée en affichant des données, lesquelles doivent être notifiées auxdites personnes viser après que lesdites personnes visées qui sont déterminées comme ayant une importance élevée aient été dans un état d'immobilité, à proximité d'un emplacement ou d'un prolongement d'une ligne reliant des personnes visées autres que lesdites personnes visées qui sont déterminées comme ayant une importance élevée dans ledit groupe.

16. Système selon la revendication 12, dans lequel ledit dispositif de notification de données (1) est adapté pour exécuter un échange de données bidirectionnel avec lesdites personnes visées (3) à un instant avant que les personnes visées qui sont déterminées comme ayant une importance élevée ne soient dans un état d'immobilité, et exécuter une notification de données unidirectionnelle à un instant après que les personnes visées qui sont déterminées comme ayant une importance élevée aient été dans un état d'immobilité.

17. Système selon la revendication 8, dans lequel :
ledit serveur de traitement de données (6) est adapté pour déterminer que ledit groupe est dans un état d'immobilité comme observé depuis la relation de position avec ledit dispositif d'acquisition de données (5) ou ledit dispositif de notification de données (1), lorsqu'au moins l'une des conditions suivantes est satisfaite :
un certain nombre de personnes visées (3) ou plus dans ledit groupe ou la totalités desdites personnes visées dans ledit groupe ont été localisées dans la même zone pendant une période de temps spécifique ou plus longue comme observé depuis ledit dispositif d'acquisition de données (5) ou ledit dispositif de notification de données (1),
un certain nombre de personnes visées (3) ou plus dans ledit groupe ou la totalité desdites personnes visées dans ledit groupe ont réduit une distance pendant une période de temps spécifique ou plus longue par rapport audit dispositif d'acquisition de données (5) ou audit dispositif de notification de données (1),
un certain nombre de personnes visées (3) ou plus dans ledit groupe ou la totalité desdites personnes visées dans ledit groupe se sont rapprochées dudit dispositif d'acquisition de données (5) ou dudit dispositif de notification de données (1) au sein d'une distance particulière, et
lesdites personnes visées (3) qui sont déterminées comme ayant une importance élevée ont effectué une entrée sur ledit dispositif d'acquisition de données (5) ou ledit dispositif de notification de données (1), et
lorsqu'il est déterminé que ledit groupe est dans un état d'immobilité, ledit dispositif de notification de données (1) est adapté pour exécuter une notification de données à la totalité desdites personnes visées (3) formant un groupe ou à des personnes visées autres que lesdites personnes visées qui sont déterminées comme ayant une importance élevée.

18. Système selon la revendication 17, dans lequel ledit dispositif de notification de données (1) est adapté pour effectuer l'association avec les données à notifier à des instants avant que ledit groupe ne soit dans un état d'immobilité et après que ledit groupe ait été dans un état d'immobilité.

19. Système selon la revendication 17, dans lequel ledit dispositif de notification de données (1) est adapté pour effectuer des modifications de la position de notification, de la taille et de la quantité de données entre des données à notifier auxdites personnes visées (3) avant que ledit groupe ne soit dans un état d'immobilité, et des données à notifier audit personnes visées après que ledit groupe ait été dans un état d'immobilité.

20. Système selon la revendication 17, dans lequel, lorsqu'une modification est apportée à des données à notifier auxdites personnes visées (3), ledit serveur de traitement de données (6) est adapté pour commander le dispositif de notification de données (1) de sorte que les données, lesquelles sont notifiées auxdites personnes visées une fois que ledit groupe a été dans un état d'immobilité, sont notifiées en affichant ces données à une position qui satisfait au moins une position de la partie supérieure, de la partie inférieure, du côté droit et du côté gauche des données affichées qui doivent être notifiées auxdites personnes visées avant que ledit groupe ne soit dans un état d'immobilité.

21. Système selon la revendication 17, dans lequel, lorsqu'une modification est apportée à des données à notifier auxdites personnes visées (3) ledit serveur de traitement de données (6) est adapté pour commander le dispositif de notification de données (1) de sorte que les données, lesquelles doivent être notifiées auxdites personnes visées une fois que ledit groupe a été dans un état d'immobilité, sont notifiées en affichant ces données à une position qui satisfait au moins une position parmi :
la partie avant, la partie arrière, le côté droit et le côté gauche des personnes visées (3) qui sont déterminées comme ayant une importance élevée, et
la partie avant, la partie arrière, le côté droit et le côté gauche de la direction de déplacement des personnes visées (3) qui sont déterminées comme ayant une importance élevée.

22. Système selon la revendication 17, dans lequel, lorsqu'une modification est apportée à des données à notifier auxdites personnes visées (3) ledit serveur de traitement de données (6) est adapté pour commander le dispositif de notification de données (1) de sorte que la notification est exécutée en affichant des données, lesquelles doivent être notifiées auxdites personnes visées une fois que ledit groupe a été dans un état d'immobilité, à proximité d'un emplacement sur un prolongement d'une ligne reliant des personnes visées autres que lesdites personnes visées qui sont déterminées comme ayant une importance élevée dans ledit groupe.

23. Système selon la revendication 17, dans lequel ledit dispositif de notification de données (1) est adapté pour exécuter un échange de données bidirectionnels avec lesdites personnes visées (3) à un instant avant que ledit groupe ne soit dans un état d'immobilité, et exécuter une notification de données unidirectionnelle auxdites personnes visées à un instant après que ledit groupe ait été dans un état d'immobilité.

24. Procédé selon la revendication 1, dans lequel ladite personne visée (3) d'importance élevée est déterminée sur la base d'au moins l'un parmi :
le fait que la personne visée bénéficie de l'attention la plus forte des autres membres du groupe,
le suivi des lignes visuelles desdites personnes visées en utilisant une technique de reconnaissance d'images, et
le fait que la personne visée appartienne à la catégorie la plus populaire sur la base des données relatives aux visites des personnes visées.

25. Procédé selon la revendication 1, dans lequel
lorsque ledit groupe est une famille, la personne la moins âgée est déterminée comme la personne visée d'importance élevée, et
lorsque ledit groupe est une société, la personne ayant le rang le plus élevé est déterminée comme la personne visée d'importance élevée.

26. Système selon la revendication 8, dans lequel ledit serveur de traitement (6) est adapté pour déterminer ladite personne visée (3) d'importance élevée sur la base d'au moins l'un parmi :
le fait que la personne visée bénéficie de l'attention la plus forte des autres membres du groupe,
le suivi des lignes visuelles desdites personnes visées en utilisant une technique de reconnaissance d'images, et
le fait que la personne visée appartienne à la catégorie la plus populaire sur la base des données relatives aux visites des personnes visées.

27. Système selon la revendication 8, dans lequel
lorsque ledit groupe est une famille, ledit serveur de traitement (6) est adapté pour déterminer la personne la personne la moins âgée en tant que personne visée d'importance élevée, et
lorsque ledit groupe est une société, ledit serveur de traitement (6) est adapté pour déterminer la personne la personne ayant le rang le plus élevé comme la personne visée d'importance élevée.
